# EUROPEAN PATENT SPECIFICATION

(11) **EP 3 495 949 B1**
(45) Date of publication and mention of the grant of the patent: **01.06.2022**
(21) Application number: 17836433.7
(22) Date of filing: 04.08.2017
(51) Int. Cl.: G06F 9/455, G06F 21/36, G06F 3/01, G06F 21/64, H04L 29/06

(54) **VIRTUAL REALITY-BASED INFORMATION VERIFICATION METHOD, DEVICE, DATA STORAGE MEDIUM, AND VIRTUAL REALITY APPARATUS**
AUF VIRTUELLER REALITÄT BASIERENDES INFORMATIONSÜBERPRÜFUNGSVERFAHREN, VORRICHTUNG, DATENSPEICHERMEDIUM UND VORRICHTUNG DER VIRTUELLEN REALITÄT
PROCÉDÉ ET DISPOSITIF DE VÉRIFICATION D'INFORMATIONS SUR LA BASE D'UNE RÉALITÉ VIRTUELLE, SUPPORT DE STOCKAGE DE DONNÉES ET APPAREIL DE RÉALITÉ VIRTUELLE

(30) Priority: 04.08.2016 CN 201610633377; 03.08.2017 CN 201710658057
(43) Date of publication of application: 12.06.2019
(73) Proprietor: Tencent Technology (Shenzhen) Company Limited, Shenzhen, Guangdong 518057 (CN)
(72) Inventor: DHAVAL, Jitendra Joshi, Shenzhen, Guangdong 518057 (CN); WANG, Wei, Shenzhen, Guangdong 518057 (CN); TANG, Zuoqi, Shenzhen, Guangdong 518057 (CN)
(74) Representative: Eisenführ Speiser
(86) International application number: PCT/CN2017/096044
(87) International publication number: WO 2018/024252

(56) References cited:
- CN-A- 101 145 238
- CN-A- 101 360 119
- CN-A- 102 541 448
- CN-A- 106 293 876
- US-A1- 2010 153 722
- US-A1- 2010 299 747
- US-A1- 2016 057 135

## Description

This application claims priority to Chinese Patent Application No. 201610633377.X, titled "INFORMATION AUTHENTICATION METHOD AND APPARATUS BASED ON VIRTUAL REALITY SCENARIO", filed with the Chinese Patent Office on August 4, 2016, and Chinese Patent Application No. 201710658057.4, titled "INFORMATION AUTHENTICATION METHOD AND APPARATUS BASED ON VIRTUAL REALITY SCENARIO AND STORAGE MEDIUM ", filed with the Chinese Patent Office on August 3, 2017.

### FIELD OF THE TECHNOLOGY

This application relates to the field of computers, and specifically, relates to an information authentication method based on a virtual reality scenario, an information authentication apparatus based on a virtual reality scenario, a storage medium and a virtual reality device.

### BACKGROUND OF THE DISCLOSURE

Currently, many enterprises provide different products and services in a virtual scenario, which facilitates creation of different commercialization models for a virtual reality (VR for short) scenario. An information authentication mechanism is to be established for the virtual reality scenario to perform authentication on information in a virtual reality scenario, and a process of establishing the information authentication mechanism is relatively complex.

An information authentication method exists in a reality scenario, but the information authentication method in the reality scenario has not been used in the virtual reality scenario. For example, patent document No. US 2010/153722 A1 discloses a method for authenticating user's biometric information via a virtual-world server and a trusted identity manager, and the biometric information is acquired from the user in the reality scenario. An information authentication method is to be re-established in the virtual reality scenario to perform authentication on the information in the virtual reality, and the process is relatively complex.

For the foregoing problem that the information authentication method in the virtual reality in related technologies is complex, no effective solution has been put forward currently.

### SUMMARY

According to embodiments of this application, an information authentication method and an information authentication apparatus based on a virtual reality scenario, a storage medium and a virtual reality device are provided, to solve at least a technical problem that an information authentication method in a virtual reality in related technologies is complex.

According to a first aspect of the embodiments of this application, an information authentication method based on a virtual reality scenario is provided. The information authentication method based on the virtual reality scenario includes: acquiring to-be-authenticated information in the virtual reality scenario, where the to-be-authenticated information exists in the virtual reality scenario; sending the to-be-authenticated information to an authentication device in a reality scenario, where the authentication device is configured to perform authentication on the to-be-authenticated information; and receiving an authentication result sent by the authentication device, where the authentication result is received in the virtual reality scenario, and the authentication result indicates that the to-be-authenticated information is authenticated successfully or fails to be authenticated.

According to another aspect of the embodiments of this application, an information authentication apparatus based on a virtual reality scenario is further provided. The information authentication apparatus based on the virtual reality scenario includes: an acquiring unit, configured to acquire to-be-authenticated information in the virtual reality scenario, where the to-be-authenticated information exists in the virtual reality scenario; a sending unit, configured to send the to-be-authenticated information to an authentication device in a reality scenario, where the authentication device is configured to perform authentication on the to-be-authenticated information; and a receiving unit, configured to receive an authentication result sent by the authentication device in the virtual reality scenario, where the authentication result is received, and the authentication result indicates that the to-be-authenticated information is authenticated successfully or fails to be authenticated.

According to another aspect of the embodiments of this application, a virtual reality device is provided. The virtual reality device includes a memory, a processor and a computer program which is stored in the memory and can be executed in the processor, where the processor executes the information authentication method based on a virtual reality scenario by executing the computer program.

According to another aspect of the embodiments of this application, a computer readable storage medium is provided, and a program instruction for executing the foregoing method is stored in the computer readable storage medium.

In the embodiments of this application, to-be-authenticated information in a virtual reality scenario is acquired; the to-be-authenticated information is sent to an authentication device in a reality scenario, the authentication device is configured to perform authentication on the to-be-authenticated information; and an authentication result sent by the authentication device is received in the virtual reality scenario, where the authentication result indicates that the to-be-authenticated information is authenticated successfully or fails to be authenticated. The to-be-authenticated information is sent to the authentication device in the reality scenario, the authentication device in the reality scenario performs authentication on the to-be-authenticated information, and the authentication result sent by the authentication device is received in the virtual real scenario, to perform authentication on the to-be-authenticated information in the virtual scenario, so as to implement a technical effect of simplifying an information authentication method in the virtual reality, thereby solving a technical problem that the information authentication method in the virtual reality in related technologies is complex.

### BRIEF DESCRIPTION OF THE DRAWINGS

The accompanying drawings described herein are used to provide a further understanding of this application, and form a part of this application. Exemplary embodiments of this application and descriptions thereof are used to explain this application, and do not constitute any inappropriate limitation to this application. In the figures:
FIG. 1 is a hardware structural block diagram of an information authentication method based on a virtual reality scenario according to an embodiment of this application;
FIG. 2 is a flowchart of an information authentication method based on a virtual reality scenario according to an embodiment of this application;
FIG. 3 is a schematic diagram of an information authentication system based on a virtual reality scenario according to an embodiment of the application;
FIG. 4 is a flowchart of a method for acquiring to-be-authenticated information in a virtual reality scenario according to an embodiment of this application;
FIG. 5 is a flowchart of a method for sending to-be-authenticated information to an authentication device in a reality scenario according to an embodiment of this application;
FIG. 6 is a flowchart of another method for acquiring to-be-authenticated information in a virtual reality scenario according to an embodiment of this application;
FIG. 7 is a flowchart of a method for sending to-be-authenticated information to an authentication device by a terminal according to an embodiment of this application;
FIG. 8 is a schematic flowchart of another information authentication method based on a virtual reality scenario according to an embodiment of this application;
FIG. 9 is a schematic flowchart of another information authentication method based on a virtual reality scenario according to an embodiment of this application;
FIG. 10 is a schematic flowchart of another information authentication method based on a virtual reality scenario according to an embodiment of this application;
FIG. 11 is a schematic diagram of an information authentication scenario based on a virtual reality scenario according to an embodiment of this application;
FIG. 12 is a schematic diagram of another information authentication scenario based on a virtual reality scenario according to an embodiment of this application;
FIG. 13 is a schematic diagram of an information authentication apparatus based on a virtual reality scenario according to an embodiment of this application;
FIG. 14 is a schematic diagram of another information authentication apparatus based on a virtual reality scenario according to an embodiment of this application;
FIG. 15 is a schematic diagram of another information authentication apparatus based on a virtual reality scenario according to an embodiment of this application;
FIG. 16 is a schematic diagram of another information authentication apparatus based on a virtual reality scenario according to an embodiment of this application;
FIG. 17 is a schematic diagram of another information authentication apparatus based on a virtual reality scenario according to an embodiment of this application; and
FIG. 18 is a structural block diagram of a virtual reality device according to an embodiment of this application.

### DESCRIPTION OF EMBODIMENTS

To make a person skilled in the art understand the solutions in this application better, the technical solutions in the embodiments of this application are clearly and completely described hereinafter with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

It should be noted that, in the specification, claims, and accompanying drawings of this application, the terms "first", "second", and so on are intended to distinguish between similar objects but do not necessarily indicate a specific order or sequence. It should be understood that, used data may be interchanged in suitable situations, so that the described embodiments of this application can be implemented in a sequence except the sequence described herein or shown in the figure. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

According to an embodiment of this application, an information authentication method based on a virtual reality scenario is provided.

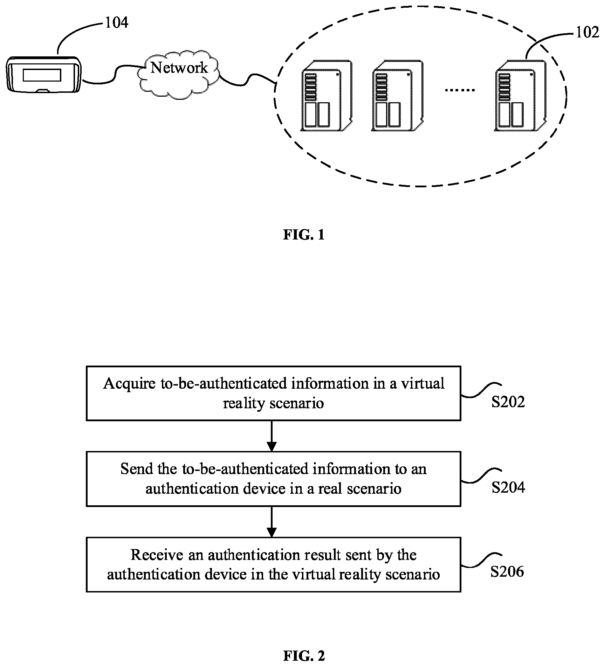

Optionally, in this embodiment, the information authentication method based on the virtual reality scenario may be applied to a hardware environment constituted by an authentication device 102 and a virtual reality device 104 as shown in FIG. 1, and the hardware environment may be a hardware environment in the virtual reality scenario. As shown in FIG. 1, the authentication device 102 is connected to the virtual reality device 104 through a network, the network including but not limited to: a wide area network, a metropolitan area network or a local area network, and the virtual reality device 104 including but not limited to: a virtual reality helmet, a pair of virtual reality glasses, a virtual reality all-in-one machine or the like. The information authentication method based on the virtual reality scenario provided in this embodiment may be performed by the authentication device 102, may be performed by the virtual reality device 104, or may be performed by the authentication device 102 and the virtual reality device 104 collectively in the virtual reality scenario. The information authentication method based on the virtual reality scenario provided in this embodiment of this application may also be performed by a client installed in the virtual reality device 104.

FIG. 2 is a flowchart of an information authentication method based on a virtual reality scenario according to an embodiment of this application. As shown in FIG. 2, the information authentication method based on the virtual reality scenario may include the following steps S202 to S206.

In step S202, to-be-authenticated information in the virtual reality scenario is acquired.

In the technical solution provided in the foregoing step S202 according to this application, the to-be-authenticated information in the virtual reality scenario is acquired. A virtual reality technology indicates a computer simulation system in which a virtual world may be established and experienced. In the technology, a computer is used to generate a simulation environment, including simulating an environment, awareness, a natural skill and a sensing device, and the technology provides multi-source information fusion and interactive simulation of a three-dimensional dynamic view and an entity behavior, to make a user immerse in the environment. To-be-authenticated information exists in the virtual reality scenario, and the to-be-authenticated information may be information of authentication to be performed on a user in the virtual reality scenario, or information of authentication to be performed on a service in the virtual reality scenario. Optionally, a virtual terminal in the virtual reality scenario may acquire the to-be-authenticated information in the virtual reality scenario, and the to-be-authenticated information may be represented by using an image.

Optionally, when the to-be-authenticated information is to be acquired in this embodiment, a virtual mobile phone in the virtual reality scenario or a controller (such as a control handle) of a virtual reality device may be used to trigger a running program to scan the image by the program, so as to acquire the to-be-authenticated information in a virtual scenario represented by the image. The controller or a program running in a virtual reality terminal 104 may be used to control the virtual mobile phone in the virtual reality scenario to scan the image in the virtual scenario. For example, the virtual mobile phone in the virtual reality scenario is controlled by the program to trigger and scan a payment image to obtain the to-be-authenticated information in the virtual reality scenario, when a payment scenario appears in the virtual reality scenario.

In step S204, the to-be-authenticated information is sent to an authentication device in a reality scenario.

In the technical solution provided in the foregoing step S204 according to this application, the to-be-authenticated information is sent to the authentication device in the reality scenario after the to-be-authenticated information in the virtual reality scenario is acquired, and the authentication device is configured to perform authentication on the to-be-authenticated information. The authentication device may be a device in which an application used for performing an authentication service on the to-be-authenticated information is installed. The application may be an instant messaging application.

In an optional example, a process of the foregoing authentication may include but is not limited to: comparing the to-be-authenticated information with information prestored in the authentication device, where it is determined that authentication succeeds if the two types of information are the same; otherwise, it is determined that authentication fails. For example, in a case that the to-be-authenticated information is a group of numbers: 1, 2, 3 and 4, it is determined that authentication succeeds if information prestored in the authentication device is 1, 2, 3 and 4; otherwise, it is determined that authentication fails.

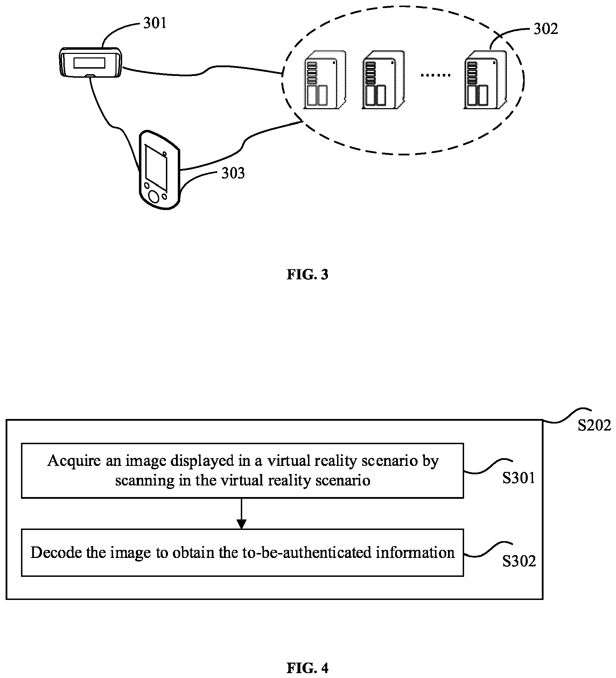

In an optional example, a process of the foregoing authentication may further include but is not limited to that: the authentication device performs matching authentication on the to-be-authenticated information and matching information (such as a payment password) inputted to a terminal (such as a terminal 303 shown in FIG. 3) in the reality scenario, and it is determined that authentication succeeds if the to-be-authenticated information matches with to the inputted matching information; otherwise, it is determined that authentication fails. In the foregoing scenario, the authentication device may prestore a corresponding relationship between the to-be-authenticated information and the matching information and so on. For example, the to-be-authenticated information includes an account A and a payment amount B. The inputted matching information includes: a payment password C. It is determined that authentication succeeds if the corresponding relationship prestored in the authentication device includes a corresponding relationship among the account A, the payment amount B and the payment password C; otherwise, it is determined that authentication fails.

FIG. 3 is a schematic diagram of an information authentication system based on a virtual reality scenario according to an embodiment of this application. As shown in FIG. 3, the system includes: a virtual reality device 301, an authentication device 302 and a terminal 303.

In an optional example, in the virtual reality scenario, the virtual reality device 301 may be directly connected to the authentication device 302. The virtual reality device 301 acquires to-be-authenticated information in the virtual reality scenario, and sends the to-be-authenticated information to the authentication device 302 in a reality scenario. The authentication device 302 is configured to perform authentication on the to-be-authenticated information. The virtual reality device 301 receives an authentication result sent by the authentication device 302. The authentication result indicates that the to-be-authenticated information is authenticated successfully or fails to be authenticated, to solve a technical problem that an information authentication method in a virtual reality is complex, thereby achieving a technical effect of simplifying the information authentication method in the virtual reality.

In another optional example, the virtual reality device 301 is connected to the authentication device 302 through the terminal 303. An API interface matching with a type of the to-be-authenticated information is searched for by the terminal 303. The terminal 303 sends the to-be-authenticated information in the virtual reality device 301 to the authentication device 302 through the API interface if the API interface matching with the type of the to-be-authenticated information is found by the terminal 303. The to-be-authenticated information may be sent to the authentication device 302 by using communications technologies: a network, Bluetooth, infrared or the like. The authentication device 302 acquires the to-be-authenticated information and determines whether the to-be-authenticated information is authenticated successfully, to obtain an authentication result. The authentication result includes an authentication result that authentication succeeds and an authentication result that authentication fails. The authentication device 302 may send the authentication result to the terminal 303 by using communications technologies: a network, Bluetooth, infrared or the like.

Optionally, the foregoing authentication device 302 and the terminal 303 may be arranged in a same apparatus or different apparatuses.

Optionally, in this embodiment, the terminal 303 in the reality scenario receives an image displayed in the virtual reality scenario, the image being obtained by encoding the to-be-authenticated information. The terminal 303 decodes the image to obtain the to-be-authenticated information, the encoding corresponding to the decoding. The terminal 303 searches for the API interface matched with the type of the to-be-authenticated information. The terminal 303 sends the to-be-authenticated information to the authentication device 302 through the API interface if the terminal 303 finds the API interface matching with the type of the to-be-authenticated information. The terminal 303 receives the authentication result sent by the authentication device 302 in the virtual reality scenario, to avoid re-establishing information authentication in the virtual reality scenario in a case of performing information authentication in the virtual reality, thereby performing authentication on the to-be-authenticated information in a virtual scenario and implementing a technical effect of simplifying an information authentication method in the virtual reality.

Optionally, the authentication device in the reality scenario is a hardware device that may be a terminal, may be a server, may be distributed, or may be integrated, and the authentication device is not limited in the embodiment of this application. The embodiment of this application may further include another form of the authentication device, to perform authentication on the to-be-authenticated information in a virtual scenario, so as to implement a technical effect of simplifying an information authentication method in a virtual reality. No example is illustrated herein.

In an optional embodiment, the process of sending the to-be-authenticated information to an authentication device in a reality scenario in step S204 includes: sending, if an API interface matching with a type of the to-be-authenticated information is found, the to-be-authenticated information to the authentication device through the API interface in the virtual reality scenario. Optionally, an instant messaging application may be used for sending the to-be-authenticated information to the authentication device, or communications technologies such as Bluetooth, infrared or a network may be used for sending the to-be-authenticated information to the authentication device. For example, a client B of the instant messaging application using an account A for login runs in the virtual reality scenario, and the account A may send the to-be-authenticated information to a client E of the instant messaging application using an account D for login in the authentication device, by using the client B of the instant messaging application and a server C of the instant messaging application.

In this embodiment, the to-be-authenticated information is sent to the authentication device through the API interface if the API interface matching with the type of the to-be-authenticated information is found. It should be noted that in addition to the above implementation, step S204 may be implemented in the follower manner. An account of the instant messaging application matching with the type of the to-be-authenticated information is searched for. The to-be-authenticated information is sent to the authentication device if the account matching with the type of the to-be-authenticated information is found. For example, the account is a chat application account. Alternatively, the to-be-authenticated information may be sent to the authentication device over a wireless network. Any method that the to-be-authenticated information may be sent to the authentication device in the virtual reality scenario falls within a scope of the embodiment of the present disclosure. No example is illustrated herein.

In step S206: an authentication result sent by the authentication device is received in the virtual reality scenario.

In the technical solution provided in the foregoing step S206 of this application, the authentication device performs authentication on the to-be-authenticated information to obtain the authentication result after the to-be-authenticated information is sent to the authentication device in the reality scenario..The authentication result may indicate a result that the to-be-authenticated information is authenticated successfully, or may indicate a result that the to-be-authenticated information fails to be authenticated. The authentication result is sent to a virtual scenario and the authentication result sent by the authentication device is received in the virtual reality scenario, after the authentication device performs authentication on the to-be-authenticated information to obtain the authentication result, thereby implementing information authentication based on the virtual reality scenario and simplifying an information authentication method in a virtual reality.

In the foregoing step S202 to step S206, to-be-authenticated information in the virtual reality scenario is acquired; the to-be-authenticated information is sent to the authentication device in the reality scenario, the authentication device being configured to perform authentication on the to-be-authenticated information; and the authentication result sent by the authentication device is received in the virtual reality scenario, the authentication result indicating that the to-be-authenticated information is authenticated successfully or fails to be authenticated. In this way, the technical problem that an information authentication method in a virtual reality in related technologies is complex can be solved, thereby achieving a technical effect of simplifying the information authentication method in the virtual reality.

In an optional embodiment, the process of acquiring to-be-authenticated information in the virtual reality scenario in step S202 includes: acquiring an image displayed in the virtual reality scenario by scanning in the virtual reality scenario and decoding the image to acquire the to-be-authenticated information.

FIG. 4 is a flowchart of a method for acquiring to-be-authenticated information in a virtual reality scenario according to an embodiment of this application. As shown in FIG. 4, the method for acquiring the to-be-authenticated information in the virtual reality scenario may include the following steps S301 to S302.

In step S301, an image displayed in the virtual reality scenario is acquired by scanning in the virtual reality scenario.

In the technical solution provided in the foregoing step S301 according to this application, the image displayed in the virtual reality scenario may be acquired by scanning and capturing the image, the image being obtained by encoding the to-be-authenticated information.

The to-be-authenticated information may be displayed in a form of an image. The to-be-authenticated information is encoded in a virtual scenario to obtain the image, and the image is authentication information encoded in accordance with a preset rule, such as a barcode. The encoded image is scanned to acquire the image, when the image is to be displayed in the virtual reality scenario.

Optionally, a program for scanning the image is triggered on a virtual terminal in the virtual reality scenario or a controller (such as a control handle) in a virtual reality device, and the virtual terminal may be but is not limited to a virtual mobile phone. The program for scanning the image may be stored in the virtual reality device (such as a VR device). The image is scanned by running the program for scanning the image, to acquire the to-be-authenticated information in a virtual scenario represented by the image, where the program for scanning the image may be provided by a virtual reality system. Optionally, the program for scanning the image is triggered by touching a button on the controller or performing a predetermined gesture by using the controller.

In an example, a program for scanning a payment image is triggered on a virtual mobile phone in a virtual reality scenario when a payment scenario appears in the virtual reality scenario. The to-be-authenticated information in the virtual reality scenario is obtained by scanning the image by running the program for scanning the payment image.

In step S302, the image is decoded to obtain the to-be-authenticated information.

In the technical solution provided in the foregoing step S302 of this application, the image is decoded to obtain the to-be-authenticated information, after the image displayed in the virtual reality scenario is acquired by scanning in the virtual reality scenario. The decoding of the image corresponds to the encoding of the image. Optionally, in a case that the image is encoded in accordance with the preset rule, the image is decoded in accordance with a decoding rule corresponding to the preset rule, to obtain authentication information.

In this embodiment, the image displayed in the virtual reality scenario is acquired by scanning in the virtual reality scenario, the image being obtained by encoding the to-be-authenticated information. The image is decoded to obtain the to-be-authenticated information, the encoding corresponding to the decoding, thereby acquiring the to-be-authenticated information in the virtual reality scenario.

In an optional embodiment, the decoding of the image includes: decoding the image, in the virtual reality scenario. The process of sending the to-be-authenticated information to an authentication device in a reality scenario in step S204 includes: sending the to-be-authenticated information to the authentication device through the API interface in the virtual reality scenario if the API interface matching with the type of the to-be-authenticated information is found.

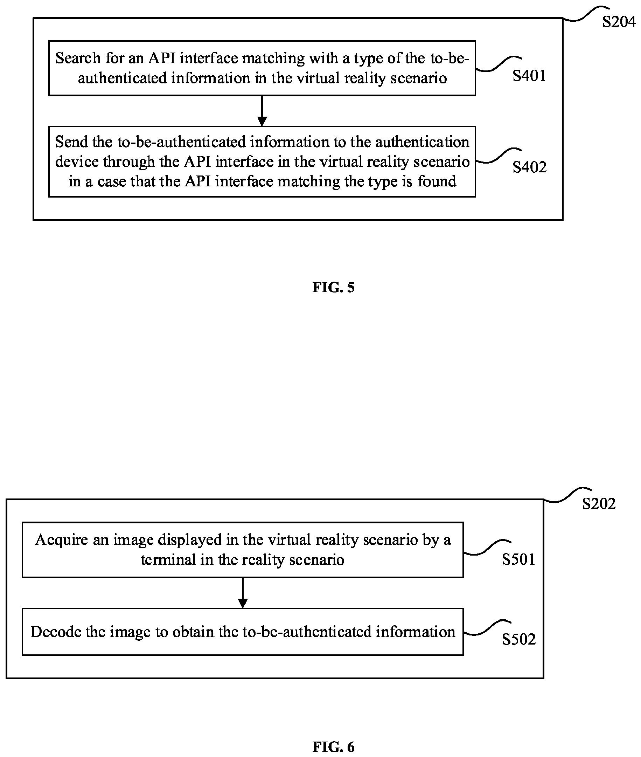

FIG. 5 is a flowchart of a method for sending to-be-authenticated information to an authentication device in a reality scenario according to an embodiment of this application. As shown in FIG. 5, the method for sending the to-be-authenticated information to the authentication device in the reality scenario includes the following steps S401 to S402.

In step S401, an API interface matching with a type of the to-be-authenticated information is searched for in a virtual reality scenario.

In the technical solution provided in the foregoing step S401 of this application, an application program interface (API for short) matching with the type of the to-be-authenticated information is searched for in the virtual reality scenario. The decoding of an image includes: decoding the image, in the virtual reality scenario to obtain the to-be-authenticated information. Optionally, multiple APIs exist in the virtual reality scenario, and different APIs correspond to different types of the to-be-authenticated information. The type of the to-be-authenticated information is determined after the to-be-authenticated information is obtained, and an API matching with the type of the to-be-authenticated information is searched for in the virtual reality scenario. The API is an invoke interface that an operating system reserves for an application, and the API is invoked by the application to instruct the operating system to execute commands of the application.

In step S402, the to-be-authenticated information is sent to the authentication device through the API interface in the virtual reality scenario if the API interface matching with the type of the to-be-authenticated information is found.

In the technical solution provided in the foregoing step S402 of this application, the to-be-authenticated information is sent to the authentication device in the reality scenario through the API interface in the virtual reality scenario, if the API interface matching with the type of the to-be-authenticated information is found.

In the embodiment, an image is decoded in the virtual reality scenario, and the API interface matching with the type of the to-be-authenticated information is searched for in the virtual reality scenario. The to-be-authenticated information is sent to the authentication device through the API interface in the virtual reality scenario if the API interface matching with the type of the to-be-authenticated information is found, thereby sending the to-be-authenticated information to the authentication device in the reality scenario.

In an optional implementation, an image displayed in the virtual reality scenario may be sent to a terminal, and the terminal is configured to decode the image to obtain the to-be-authenticated information, the encoding corresponding to the decoding. The process of sending the to-be-authenticated information to the authentication device in the reality scenario includes: searching, by the terminal, for the API interface matching with the type of the to-be-authenticated information, and sending, by the terminal, the to-be-authenticated information to the authentication device through the API interface if the API interface matching with the type of the to-be-authenticated information is found.

The terminal may decode the image to acquire the to-be-authenticated information. Specifically, the image displayed in the virtual reality scenario is sent to the terminal, and the image is decoded by the terminal. The terminal is not limited to a smartphone, a tablet computer or the like. In a case that the image is encoded in accordance with a preset rule, the image is decoded in accordance with a decoding rule corresponding to the preset rule, to obtain authentication information. The terminal searches for the API interface matching with the type of the to-be-authenticated information after the image is sent to the terminal, and the terminal sends the to-be-authenticated information to the authentication device through the API interface if the API interface matching with the type of the to-be-authenticated information is found. Optionally, the terminal and the terminal device in this embodiment may be the same, or both the terminal and the terminal device may be the virtual reality device.

In an optional embodiment, the process of acquiring to-be-authenticated information in the virtual reality scenario in step S202 includes: acquiring the image displayed in the virtual reality scenario by the terminal in the reality scenario, and decoding the image to obtain the to-be-authenticated information.

FIG. 6 is a flowchart of another method for acquiring to-be-authenticated information based on a virtual reality scenario according to an embodiment of this application. As shown in FIG. 6, the method for acquiring the to-be-authenticated information in the virtual reality scenario may include the following steps S501 to S502.

In step S501, an image displayed in the virtual reality scenario is acquired by a terminal in a reality scenario.

In the technical solution provided in the foregoing step S501 of this application, the image displayed in the virtual reality scenario is acquired by the terminal in the reality scenario, the image being obtained by encoding the to-be-authenticated information.

A terminal exists in the reality scenario, and the terminal may be a smartphone, a tablet computer or the like. The terminal receives an image displayed in the virtual reality scenario and sent through a corresponding API interface or by an instant messaging application or a wireless network. For example, the terminal receives the sent image displayed in a virtual scenario by Bluetooth, and the image is obtained by encoding the to-be-authenticated information. Optionally, the foregoing instant messaging application may be but is not limited to a chat application or the like, and the wireless network may be but is not limited to a WIFI network or the like. The instant messaging application and the wireless network are not limited herein.

In step S502, the image is decoded to obtain the to-be-authenticated information.

In the technical solution provided in the foregoing step S502 of this application, the image is decoded to obtain the to-be-authenticated information after the image displayed in the virtual reality scenario is acquired by the terminal in the reality scenario, and the encoding corresponds to the decoding. In a case that the to-be-authenticated information is encoded in accordance with a preset rule to obtain an image, the image is decoded in accordance with a decoding rule corresponding to the preset rule to obtain the to-be-authenticated information.

Optionally, the process of sending the to-be-authenticated information to an authentication device in a reality scenario in step S204 includes: sending the to-be-authenticated information to the authentication device by the terminal. The terminal may send the to-be-authenticated information to the authentication device using a third-generation mobile communications technology (3G for short), a fourth-generation mobile communications technology (4G for short), or a fifth-generation mobile communications technology (5G for short) after the image is decoded to obtain the to-be-authenticated information, and the authentication device may be an application, such as an instant messaging application.

In the embodiment, the image displayed in the virtual reality scenario is acquired by the terminal in the reality scenario, the image being obtained by encoding the to-be-authenticated information. The image is decoded to obtain the to-be-authenticated information, the encoding corresponding to the decoding. The to-be-authenticated information is sent to the authentication device by the terminal, thereby achieving a technical effect of simplifying an information authentication method in a virtual reality.

In an optional embodiment, the process of sending the to-be-authenticated information to an authentication device by a terminal in step S204 includes: sending, if an API interface matching with a type of the to-be-authenticated information is found, the to-be-authenticated information to the authentication device through the API interface.

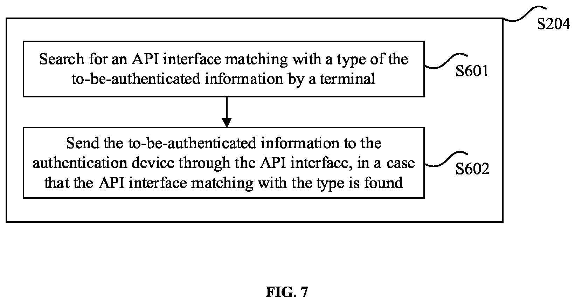

FIG. 7 is a flowchart of a method for sending to-be-authenticated information to an authentication device by a terminal according to an embodiment of this application. As shown in FIG. 7, the method for sending the to-be-authenticated information to the authentication device by the terminal includes the following steps S601 to S602.

In step S601, an API interface matching with a type of the to-be-authenticated information is searched for by the terminal.

In the technical solution provided in the foregoing step S601 of this application, an API interface matching with the type of the to-be-authenticated information is searched for by a terminal after the to-be-authenticated information in a virtual reality scenario is acquired. In other words, the API interface matching with the type of the to-be-authenticated information is identified from multiple API interfaces by the terminal. The terminal may be a smartphone, a tablet computer or the like. The terminal is installed with an application, and may be configured to perform an authentication service.

In step S602, the to-be-authenticated information is sent to the authentication device through the API interface if the API interface matching with the type of the to-be-authenticated information is found.

In the technical solution provided in the foregoing step S602 of this application, the to-be-authenticated information is sent to the authentication device through the API interface, if the API interface matching with the type of the to-be-authenticated information is found. Optionally, the to-be-authenticated information is sent to the authentication device through the API interface under 3G, 4G, or 5G network, and the authentication device may be an application, such as an instant messaging application.

In the embodiment, the API interface matching with the type of the to-be-authenticated information is searched for by the terminal. The to-be-authenticated information is sent to the authentication device through the API interface if the API interface matching with the type of the to-be-authenticated information is found, thereby sending the to-be-authenticated information to the authentication device by the terminal.

In an optional embodiment, the image includes an image displaying a two-dimensional code. The two-dimensional code image is an image obtained by encoding the to-be-authenticated information, and the to-be-authenticated information in the virtual reality scenario may be acquired by scanning the two-dimensional code image. The two-dimensional code image is decoded, to obtain the to-be-authenticated information. The encoding rule for encoding the to-be-authenticated information corresponds to the decoding rule for decoding the two-dimensional code image.

Optionally, the image is an image with a two-dimensional barcode quick response (QR) code. The QR code is a quadrate and includes only two colors: black and white. Three of four corners have a relatively small and square shaped pattern like Chinese character " 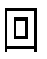 ". The three patterns are used for assisting decoding software in positioning. A user does not need to align with the patterns and data can be read correctly whatever angle being used for scanning. The QR code can store more data than a common barcode, and can be scanned successfully without aligning with a scanner straightly as the common barcode when being scanned.

In the foregoing embodiment of this application, the to-be-authenticated information in the virtual reality scenario is acquired. The to-be-authenticated information is sent to an authentication device in a reality scenario, and the authentication device is configured to perform authentication on the to-be-authenticated information. An authentication result sent by the authentication device is received in a virtual reality scenario. The authentication result indicates that the to-be-authenticated information is authenticated successfully or fails to be authenticated. The authentication device in the reality scenario performs authentication on the to-be-authenticated information, and the authentication result sent by the authentication device is received in the virtual reality scenario instead of re-establishing information authentication in the virtual reality scenario, to perform authentication on the to-be-authenticated information in a virtual scenario, and avoid re-establishing information authentication in the virtual reality scenario in a case of performing authentication on information in a virtual reality, thereby implementing a technical effect of simplifying the information authentication method in the virtual reality, and solving a technical problem that the information authentication method in the virtual reality in related technologies is complex.

In the following, a technical solution of this application is described with reference to an optional embodiment.

The to-be-authenticated information in a virtual reality scenario is acquired by decoding an image in the virtual reality scenario, and an API interface matching with a type of the to-be-authenticated information in the virtual reality scenario is searched for. The to-be-authenticated information is sent to the authentication device in the reality scenario through the API interface in the virtual reality scenario, if the API interface matching with the type of the to-be-authenticated information is found.

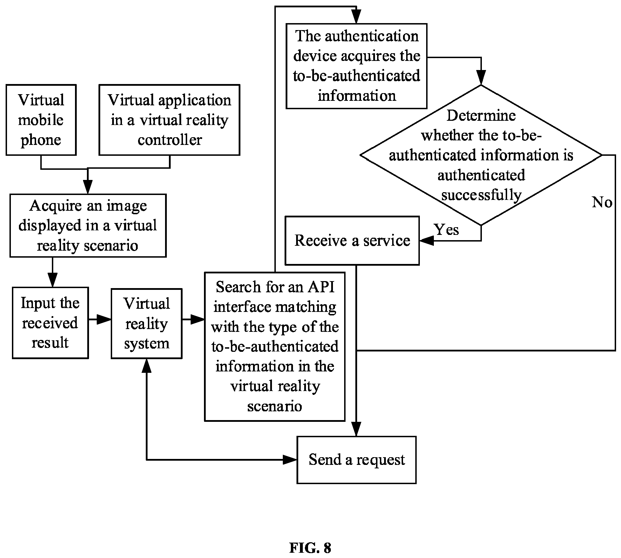

FIG. 8 is a schematic flowchart of another information authentication method based on a virtual reality scenario according to an embodiment of this application. As shown in FIG. 8, the embodiment describes a combination of the virtual reality scenario and the reality scenario. The executing method in the virtual reality scenario includes: acquiring an image (Capture Virtual image) displayed in the virtual reality scenario, receiving an inputted result (input received), executing a virtual reality system (VR System), and searching for an API (Identify the right 3rd party API) interface matching with a type of the to-be-authenticated information in the virtual reality scenario, by a controller (Virtual App on VR controller, such as a control handle) in a virtual reality device and/or a virtual device (such as a virtual mobile phone) in a virtual scenario. The executing method in the reality scenario includes: acquiring the to-be-authenticated information (3rd party Authentication Service) by the authentication device; determining whether the to-be-authenticated information is authenticated successfully (Code match) by the authentication device; and receiving a service (Authenticated! Give access to service) and sending a request (such as a payment receiving or payment request) allowed to be sent when the to-be-authenticated information is authenticated successfully, if it is determined that the to-be-authenticated information is authenticated successfully; and sending a request allowed to be sent when the to-be-authenticated information fails to be authenticated, if it is determined that the to-be-authenticated information fails to be authenticated. The virtual reality system may receive a sending request, or may output a sending request.

Optionally, in this embodiment, the controller (such as a control handle) in a virtual reality device and a virtual device in a virtual scenario collectively or independently trigger a program for scanning the image, to acquire the image displayed in the virtual reality scenario. The controller may be hardware in the virtual reality device, such as a control handle of a VR device. Optionally, a button on the controller may be touched to trigger to run the program for scanning the image, or a predetermined gesture is performed by a controller to trigger to run the program for scanning the image. Optionally, the image displayed in the virtual reality scenario is acquired by scanning in the virtual reality scenario, and the image is obtained by encoding the to-be-authenticated information. An input result is received after the image displayed in the virtual reality scenario is acquired, the input result is inputted to a virtual reality system, and a request is sent by the virtual reality system. Optionally, the sent request may be a payment or payment receiving request in a virtual reality. An API interface matching with a type of the to-be-authenticated information is searched for in the virtual reality scenario after the input result is inputted to the virtual reality system, and the to-be-authenticated information is sent to an authentication device through the API interface if the API interface matching with the type of the to-be-authenticated information is found. Optionally, a personal identification number (PIN for short) is inputted if being requested. The authentication device acquires the to-be-authenticated information, determines whether the to-be-authenticated information is authenticated successfully, and receives a service and sends a request if it is determined that the to-be-authenticated information is authenticated successfully. Optionally, the request corresponds to information of a two-dimensional code image. The authentication device sends a request if it is determined that the to-be-authenticated information fails to be authenticated, to perform authentication on the to-be-authenticated information in a virtual scenario, thereby implementing a technical effect of simplifying an information authentication method in a virtual reality.

In this embodiment, the image is decoded in the virtual reality scenario to obtain the to-be-authenticated information. An API interface matching with a type of the to-be-authenticated information is searched for in the virtual reality scenario. The to-be-authenticated information is sent to the authentication device in the virtual reality scenario through the API interface, if the API interface matching with the type of the to-be-authenticated information is found. An authentication result sent by the authentication device is received in the virtual reality scenario, to perform authentication on the to-be-authenticated information in a virtual scenario, and avoid re-establishing information authentication in the virtual reality scenario in a case of performing authentication on information in a virtual reality, thereby implementing a technical effect of simplifying an information authentication method in the virtual reality.

In another example, an image displayed in a virtual reality scenario may be sent to a terminal, and the terminal is configured to decode the image to obtain the to-be-authenticated information, the encoding corresponding to the decoding. An API interface matching with a type of the to-be-authenticated information is searched for by the terminal, and the to-be-authenticated information is sent to the authentication device in a reality scenario through the API interface if the API interface matching with the type of the to-be-authenticated information is found.

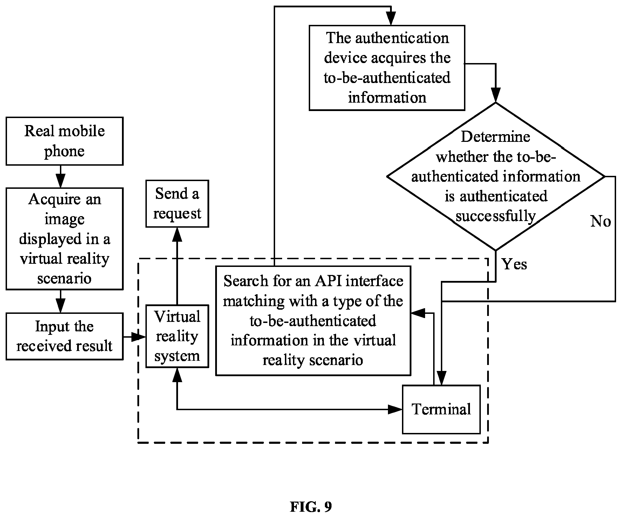

FIG. 9 is a schematic flowchart of another information authentication method based on a virtual reality scenario according to an embodiment of this application. As shown in FIG. 9, this embodiment describes a combination of an external monitor (External Monitor) and a reality scenario (Real World System). Hardware to which the external monitor relates includes: a terminal in the reality scenario, and the terminal may include but is not limited to: a smartphone, a tablet computer or the like. The terminal is not limited herein. In an external monitor process, an image (Capture Virtual image) displayed in a virtual reality scenario is acquired, a received result (input received) is inputted, a virtual reality system (VR System) is executed, and a request (Offer or Payment request, such as a payment receiving or payment request) is sent. The reality scenario includes that: an API interface matching with a type of to-be-authenticated information is searched for by the terminal; an authentication device acquires the to-be-authenticated information (3rd party Authentication Service) and determines whether the to-be-authenticated information is authenticated successfully (Code match), to obtain an authentication result; the authentication result is inputted to the terminal, and the terminal may perform interaction with the virtual reality system.

In an optional example, the image displayed in the virtual reality scenario may be received by the terminal, and the terminal is installed with an application and provides an authentication service. Optionally, the image displayed in the virtual reality scenario is acquired by scanning in the virtual reality scenario, and the image is obtained by encoding the to-be-authenticated information and may be a two-dimensional code (QR code). An input result is received after the image displayed in the virtual reality scenario is acquired, the input result is inputted to a virtual reality system, and a request is sent by the virtual reality system. Optionally, the sent request may be a payment or payment receiving request in a virtual reality. The image in the virtual reality scenario is decoded by Bluetooth to obtain the to-be-authenticated information, after the input result is inputted to the virtual reality system. The to-be-authenticated information is sent to the terminal, and a PIN code is inputted to the terminal when being requested. An API interface matching with a type of the to-be-authenticated information is searched for by the terminal. If the API interface matching with the type of the to-be-authenticated information is found, the to-be-authenticated information is sent to an authentication device through the API interface by 3G, 4G, or 5G. The authentication device acquires the to-be-authenticated information and determines whether the to-be-authenticated information is authenticated successfully, to obtain an authentication result. The authentication result is inputted to the terminal, and a virtual system may receive an appropriate response and displays a related interface or information. The authentication result sent by the authentication device is received in the virtual reality scenario, to perform authentication on the to-be-authenticated information in a virtual scenario, and avoid re-establishing information authentication in the virtual reality scenario in a case of performing authentication on information in a virtual reality, thereby implementing a technical effect of simplifying an information authentication method in the virtual reality.

In the embodiment, an image displayed in a virtual reality scenario is sent to a terminal, and the terminal is configured to decode the image to obtain the to-be-authenticated information, the encoding corresponding to the decoding. An API interface matching with a type of the to-be-authenticated information is searched for by the terminal, and the to-be-authenticated information is sent to the authentication device through the API interface if the API interface matching with the type of the to-be-authenticated information is found, to perform authentication on the to-be-authenticated information in a virtual scenario, thereby implementing a technical effect of simplifying an information authentication method in the virtual reality.

An image displayed in a virtual reality scenario is acquired by a terminal in a reality scenario, and the image is obtained by encoding to-be-authenticated information. The image is decoded to obtain the to-be-authenticated information, so as to acquire the to-be-authenticated information in the virtual reality scenario, and the encoding corresponds to the decoding. The to-be-authenticated information is sent to the authentication device by the terminal. An API interface matching with a type of the to-be-authenticated information is searched for by the terminal. The to-be-authenticated information is sent to an authentication device in the reality scenario through the API interface, if the API interface matching with the type of the to-be-authenticated information is found. An authentication result sent by the authentication device is received in the virtual reality scenario, to avoid re-establishing information authentication in a virtual reality scenario in a case of performing authentication on information in a virtual reality, and perform authentication on the to-be-authenticated information in a virtual scenario, thereby implementing a technical effect of simplifying an information authentication method in the virtual reality.

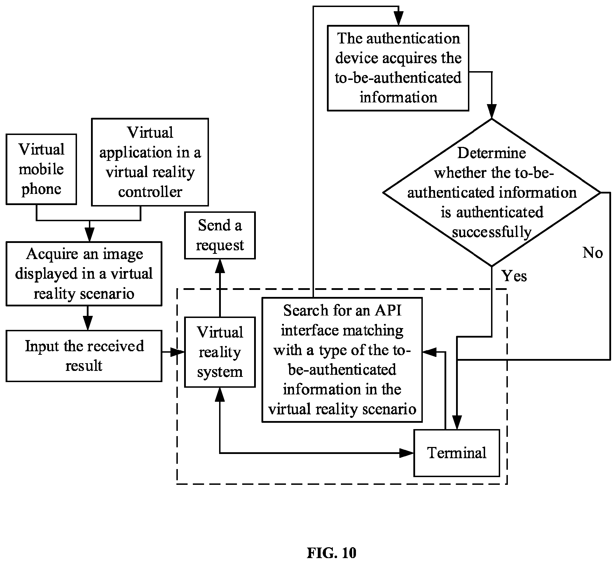

FIG. 10 is a schematic flowchart of another information authentication method based on a virtual reality scenario according to an embodiment of this application. As shown in FIG. 10, the embodiment describes a combination of the virtual reality scenario (VR System) and the reality scenario (Real World System). A controller (such as a control handle) in a virtual reality device and a virtual device in a virtual scenario collectively or independently trigger a program for scanning an image, to acquire the image displayed in the virtual reality scenario (capture virtual image), input a received result (input received), execute a virtual reality system (VR System), and send a request (Offer or Payment request). The reality scenario includes that: an API interface matching with a type of to-be-authenticated information is searched for by a terminal; an authentication device acquires the to-be-authenticated information (3rd party Authentication Service) and determines whether the to-be-authenticated information is authenticated successfully (Code match), to obtain an authentication result; the authentication result is inputted to the terminal, and the terminal may perform interaction with the virtual reality system.

A controller (such as a control handle) in a virtual reality device and a virtual device in a virtual scenario collectively or independently trigger a program for scanning an image, to acquire the image displayed in the virtual reality scenario. Optionally, the image displayed in the virtual reality scenario is acquired by scanning in the virtual reality scenario, and the image is obtained by encoding the to-be-authenticated information and may be a two-dimensional code (QR code). An input result is received after the image displayed in the virtual reality scenario is acquired, the input result is inputted to a virtual reality system, and a request is sent by the virtual reality system. Optionally, the sent request may be a payment or payment receiving request in a virtual reality. The image in the virtual reality scenario is decoded by Bluetooth to obtain the to-be-authenticated information, after the input result is inputted to the virtual reality system. The to-be-authenticated information is sent to the terminal, and a PIN code is inputted to the terminal when the terminal being requested. An API interface matching with a type of the to-be-authenticated information is searched for by the terminal. If the API interface matching with the type of the to-be-authenticated information is found, the to-be-authenticated information is sent to an authentication device through the API interface by 3G, 4G, or 5G. The authentication device acquires the to-be-authenticated information and determines whether the to-be-authenticated information is authenticated successfully, to obtain an authentication result. The authentication result is inputted to the terminal, and a virtual system may receive an appropriate response and displays a related interface or information, to perform authentication on the to-be-authenticated information in a virtual scenario, thereby implementing a technical effect of simplifying an information authentication method in the virtual reality.

In this embodiment, the image displayed in the virtual reality scenario is acquired by the terminal in the reality scenario, the image being obtained by encoding the to-be-authenticated information. The image is decoded to obtain the to-be-authenticated information, the encoding corresponding to the decoding. The to-be-authenticated information is sent to the authentication device by the terminal, and an API interface matching with the type of the to-be-authenticated information is searched for by the terminal. The to-be-authenticated information is sent to an authentication device through the API interface, if the API interface matching with the type of the to-be-authenticated information is found. An authentication result sent by the authentication device is received in the virtual reality scenario, to avoid re-establishing information authentication in the virtual reality scenario in a case of performing authentication on information in a virtual reality, to perform authentication on the to-be-authenticated information in a virtual scenario, thereby implementing a technical effect of simplifying an information authentication method in the virtual reality.

An application environment of this embodiment of this application may include but is not limited to the application environment of the foregoing embodiment, and details are not described in this embodiment again. In an embodiment of this application, an optional specific application for implementing the information authentication method based on the virtual reality scenario is described.

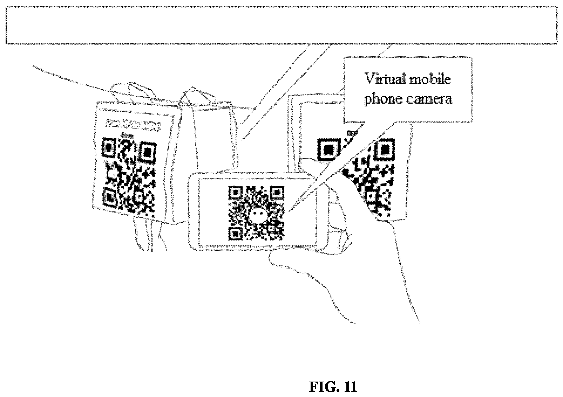

FIG. 11 is a schematic diagram of an information authentication scenario based on a virtual reality scenario according to an embodiment of this application. As shown in FIG. 11, in the virtual reality scenario, users may perform authentication on their information or perform authentication on any service information by using a two-dimensional code (QR code) by a virtual mobile phone camera.

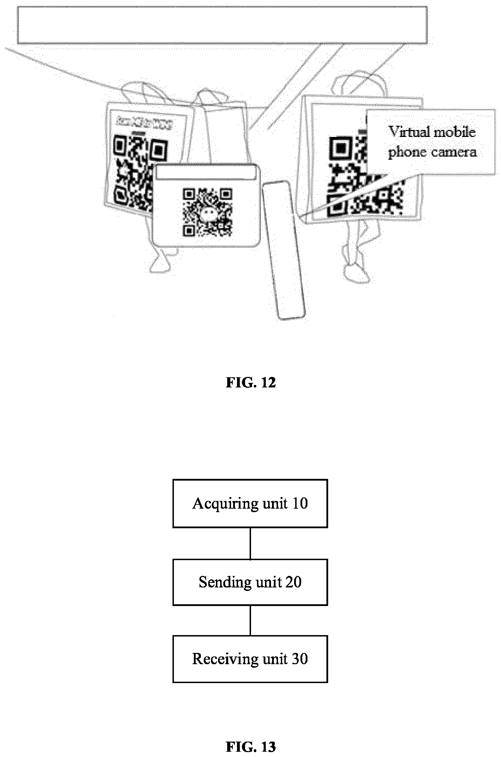

FIG. 12 is a schematic diagram of another information authentication scenario based on a virtual reality scenario according to an embodiment of this application. As shown in FIG. 12, users may select a scan mode of a controller when using a virtual mobile phone camera, to perform authentication on their information by scanning a two-dimensional code (QR code).

In the embodiments of this application, an information authentication method in a reality scenario and a virtual reality scenario is provided, and an enterprise need not spend a resource to re-establish new authentication, thereby implementing a technical effect of simplifying an information authentication method in a virtual reality, and further extending a service in the virtual reality.

It should be noted that, to simplify the description, the foregoing method embodiments are described as a series of action combination, but persons of ordinary skill in the art should know that this application is not limited to any described sequence of the action, and some steps can be performed in other sequences or can be performed simultaneously according to this application. In addition, persons skilled in the art should know that the embodiments described in the specification are optional and the involved actions and modules are not necessary for this application.

Through the foregoing description of the implementation manners, it is clear to persons skilled in the art that the method of the foregoing embodiments may be implemented by software plus a necessary universal hardware platform, and certainly may also be implemented by hardware. In many cases, the software implementation is preferable. Based on such understanding, the technical solutions of this application or the part that makes contributions to the conventional technology may be embodied in the form of a software product. The computer software product is stored in a storage medium (for example, a ROM/RAM, a magnetic disk, or an optical disc), and contains several instructions for instructing a terminal device (which may be a mobile phone, a computer, a server, or a network device) to perform the method according to the embodiments of this application.

According to an embodiment of this application, an information authentication apparatus based on a virtual reality scenario used for implementing the information authentication method based on the virtual reality scenario is further provided. FIG. 13 is a schematic diagram of an information authentication apparatus based on a virtual reality scenario according to an embodiment of this application. As shown in FIG. 13, the apparatus may include: an acquiring unit 10, a sending unit 20 and a receiving unit 30.

The acquiring unit 10 is configured to acquire to-be-authenticated information in a virtual reality scenario.

A virtual reality technology indicates a computer simulation system in which a virtual world may be established and experienced. In the technology, a computer is used to generate a simulation environment, including simulating an environment, awareness, a natural skill and a sensing device, and the technology provides multi-source information fusion and interactive simulation of a three-dimensional dynamic view and an entity behavior, to make a user immerse in the environment. The virtual reality scenario has to-be-authenticated information, and the to-be-authenticated information may be information of authentication to be performed on the user in the virtual reality scenario, or information of authentication to be performed on a service in the virtual reality scenario. Optionally, a virtual device exists in the virtual reality scenario, the acquiring unit 10 acquires the to-be-authenticated information of the virtual device in the virtual reality scenario, and the to-be-authenticated information may be represented by an image.

Optionally, a virtual terminal (such as a virtual mobile phone, a virtual camera or other terminals that can be used for photographing) in the virtual reality scenario or a controller in a virtual reality device may be used for triggering a program for scanning the image, when the to-be-authenticated information is to be acquired in the embodiment. The program for scanning the image is run to scan the image, to acquire the to-be-authenticated information in a virtual scenario represented by the image, where the program for scanning the image may run in an operational system (such as an operating system) of the virtual reality device. For example, a virtual mobile phone in a virtual reality scenario is used for triggering a program for scanning a payment image in a case that a payment scenario appears in the virtual reality scenario, and to-be-authenticated information in the virtual reality scenario is obtained by scanning the image by running the program for scanning the payment image.

The sending unit 20 is configured to send the to-be-authenticated information to an authentication device in a reality scenario, and the authentication device is configured to perform authentication on the to-be-authenticated information.

The sending unit 20 is configured to send the to-be-authenticated information to an authentication device in a reality scenario after the to-be-authenticated information in the virtual reality scenario is acquired. The authentication device is configured to perform authentication on the to-be-authenticated information and may be a device that an application for performing an authentication service on to-be-authenticated information is installed. The application may be an instant messaging application.

A relationship among a terminal, a server and an authentication device in this embodiment is shown in FIG. 3, and details are not described herein again.

Optionally, the sending unit 20 is further configured to send, if an API interface matching with a type of the to-be-authenticated information is found, the to-be-authenticated information to the authentication device through the API interface in the virtual reality scenario.

It should be noted that, in this embodiment, the process of sending, if an API interface matching with the type of the to-be-authenticated information is found, the to-be-authenticated information to the authentication device through the API interface may include: searching for an account of an instant messaging application matching with a type of the to-be-authenticated information. The to-be-authenticated information is sent to the authentication device if the account matching with the type of the to-be-authenticated information is found. For example, the account is a chat application account. The to-be-authenticated information may be sent to the authentication device over a wireless network. Any method of sending the to-be-authenticated information to the authentication device in the virtual reality scenario falls within the scope of the embodiment of the present disclosure. No example is illustrated herein.

The receiving unit 30 is configured to receive an authentication result sent by the authentication device in a virtual reality scenario. The authentication result indicates that the to-be-authenticated information is authenticated successfully or fails to be authenticated.

The authentication device performs authentication on the to-be-authenticated information to obtain the authentication result, after the to-be-authenticated information is sent to the authentication device in a reality scenario. The authentication result may indicate a result that the to-be-authenticated information is authenticated successfully, or may indicate a result that the to-be-authenticated information fails to be authenticated. The authentication device sends the authentication result to a virtual scenario after performing authentication on the to-be-authenticated information to obtain the authentication result. The authentication result sent by the authentication device is received by the receiving unit 30 in the virtual reality scenario, thereby implementing information authentication based on the virtual reality scenario and simplifying an information authentication method in a virtual reality.

In this embodiment, the acquiring unit 10 acquires the to-be-authenticated information in the virtual reality scenario, and the sending unit 20 sends the to-be-authenticated information to the authentication device in the reality scenario. The authentication device is configured to perform authentication on the to-be-authenticated information, and the receiving unit 30 receives the authentication result sent by the authentication device in the virtual reality scenario. The authentication result indicates that the to-be-authenticated information is authenticated successfully or fails to be authenticated. According to this application, a technical problem that an information authentication method in a virtual reality in related technologies is complex is solved, thereby achieving a technical effect of simplifying the information authentication method in the virtual reality.

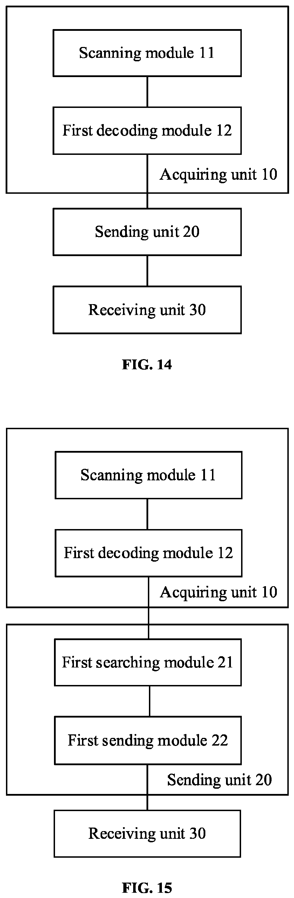

FIG. 14 is a schematic diagram of another information authentication apparatus based on a virtual reality scenario according to an embodiment of this application. As shown in FIG. 14, the information authentication apparatus based on the virtual reality scenario includes: an acquiring unit 10, a sending unit 20 and a receiving unit 30. The acquiring unit 10 includes: a scanning module 11 and a first decoding module 12.

It should be noted that, functions of the acquiring unit 10, the sending unit 20 and the receiving unit 30 in this embodiment are the same as functions of corresponding components of the information authentication apparatus based on the virtual reality scenario in the embodiment shown in FIG. 13, and details are not described herein again.

The scanning module 11 is configured to acquire, in the virtual reality scenario, an image displayed in the virtual reality scenario by scanning, the image being obtained by encoding the to-be-authenticated information.

The image displayed in the virtual reality scenario may be acquired by scanning and capturing the image by using the scanning module 11, the image being obtained by encoding the to-be-authenticated information.

The to-be-authenticated information may be displayed in a form of an image. The to-be-authenticated information in a virtual scenario is encoded to obtain the image, and the image is authentication information encoded in accordance with a preset rule, such as a barcode. The encoded image is scanned by the scanning module 11 when the image is to be displayed in the virtual reality scenario, to acquire the image by the acquiring unit 10.

Optionally, a program for scanning the image may be triggered on a virtual mobile phone or a controller in the virtual reality scenario, and the image is scanned by the program for scanning the image to acquire to-be-authenticated information in a virtual scenario represented by the image. The program for scanning the image may run in an operational system (such as an operating system) in a virtual reality device.

In an example, a program for scanning a payment image is triggered on a virtual mobile phone in a virtual reality scenario when a payment scenario appears in the virtual reality scenario, and to-be-authenticated information in the virtual reality scenario is obtained by scanning the image by running the program for scanning the payment image.

The first decoding module 12 is configured to decode the image to obtain the to-be-authenticated information, the encoding corresponding to the decoding.

The image is decoded by the first decoding module 12 to obtain the to-be-authenticated information, after the image displayed in the virtual reality scenario is acquired by scanning by the scanning module 11 in the virtual reality scenario. The decoding of the image corresponds to the encoding of the image. Optionally, the first decoding module 12 decodes the image in accordance with a decoding rule corresponding to a preset rule to obtain authentication information, in a case that the image is encoded in accordance with the preset rule.

FIG. 15 is a schematic diagram of another information authentication apparatus based on a virtual reality scenario according to an embodiment of this application. As shown in FIG. 15, the information authentication apparatus based on the virtual reality scenario includes: an acquiring unit 10, a sending unit 20 and a receiving unit 30. The acquiring unit 10 includes: a scanning module 11 and a first decoding module 12. The sending unit 20 includes: a first searching module 21 and a first sending module 22.

It should be noted that, functions of the acquiring unit 10, the sending unit 20, the receiving unit 30, the scanning module 11 and the first decoding module 12 in this embodiment are the same as functions of corresponding components of the information authentication apparatus based on the virtual reality scenario in the embodiment shown in FIG. 14, and details are not described herein again.

The first decoding module 12 is configured to decode an image in the virtual reality scenario to obtain the to-be-authenticated information.

The first searching module 21 is configured to search for an application programming interface (API) matching with a type of the to-be-authenticated information in the virtual reality scenario. Optionally, multiple APIs exist in the virtual reality scenario, and different APIs correspond to different types of to-be-authenticated information. The type of the to-be-authenticated information is determined after the to-be-authenticated information is obtained, and the first searching module 21 searches for an API matching with the type of the to-be-authenticated information in the virtual reality scenario. The API is an invoke interface that an operating system reserves for an application, and the API is invoked by an application to instruct the operating system to execute commands of the application.

The first sending module 22 is configured to send, if an API interface matching with a type of the to-be-authenticated information is found, the to-be-authenticated information to the authentication device through the API interface in the virtual reality scenario.

The first sending module 22 sends the to-be-authenticated information to an authentication device in reality scenario through the API interface in the virtual reality scenario in a case that the first searching module 21 finds the API interface matching with the type of the to-be-authenticated information.

Optionally, the first decoding module 12 is configured to send the image to a terminal, and the terminal is configured to decode the image to obtain the to-be-authenticated information, the encoding corresponding to the decoding. The sending unit 20 is configured to search for the API interface matching with the type of the to-be-authenticated information by the terminal, and send the to-be-authenticated information to the authentication device through the API interface, if the API interface matching with the type of the to-be-authenticated information is found.

The terminal may decode the image. The acquiring unit 10 may acquire the to-be-authenticated information in the following manner. The acquiring unit 10 sends the image to the terminal and the terminal decodes the image to acquire the to-be-authenticated information. The terminal is not limited to a smartphone, a tablet computer or the like. The first decoding module 12 may decode the image in accordance with a decoding rule corresponding to a preset rule to obtain the to-be-authenticated information, in a case that the image is encoded in accordance with the preset rule. An API interface matching with a type of to-be-authenticated information is searched for by the terminal after the sending unit 20 sends the image to the terminal, and the terminal sends the to-be-authenticated information to the authentication device through the API interface if the API interface matching with the type of the to-be-authenticated information is found. Optionally, the terminal and the terminal device in this embodiment may be the same, or both the terminal and the terminal device may be the virtual reality device.

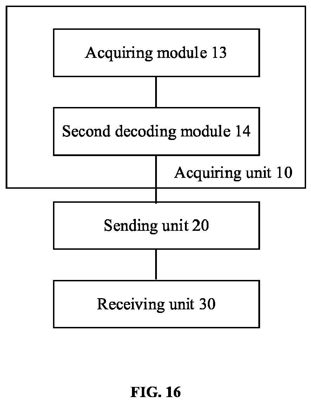

FIG. 16 is a schematic diagram of another information authentication apparatus based on a virtual reality scenario according to an embodiment of this application. As shown in FIG. 16, the information authentication apparatus based on the virtual reality scenario includes: an acquiring unit 10, a sending unit 20 and a receiving unit 30. The acquiring unit 10 includes: an acquiring module 13 and a second decoding module 14.

It should be noted that, functions of the acquiring unit 10, the sending unit 20 and the receiving unit 30 in this embodiment are the same as functions of corresponding components in the information authentication apparatus based on the virtual reality scenario in the embodiment shown in FIG. 13, and details are not described herein again.

The acquiring module 13 is configured to acquire an image displayed in the virtual reality scenario by a terminal in a reality scenario, the image being obtained by encoding the to-be-authenticated information.

A terminal exists in the reality scenario, and the terminal may be a smartphone, a tablet computer and the like. The terminal receives an image displayed in the virtual reality scenario and sent through a corresponding API interface or by an instant messaging application or a wireless network. For example, the terminal receives the image displayed in a virtual scenario and sent by Bluetooth, and the image is obtained by encoding the to-be-authenticated information. The instant messaging application may be a chat application and the like, and the wireless network may be a WIFI network, which are not limited herein.

The second decoding module 14 is configured to decode the image to obtain the to-be-authenticated information, the encoding corresponding to the decoding.

The image is decoded by the second decoding module 14 to obtain the to-be-authenticated information, after the acquiring module 13 acquires the image displayed in the virtual reality scenario by the terminal in the reality scenario. The encoding corresponds to the decoding. The second decoding module 14 decodes the image in accordance with a decoding rule corresponding to a preset rule to obtain the to-be-authenticated information, in a case that the to-be-authenticated information is encoded in accordance with the preset rule.

Optionally, the sending unit 20 is configured to send the to-be-authenticated information to the authentication device by the terminal.

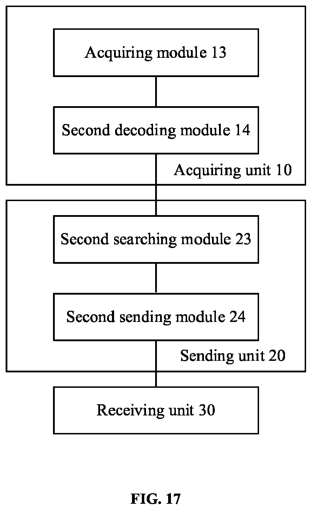

FIG. 17 is a schematic diagram of another information authentication apparatus based on a virtual reality scenario according to an embodiment of this application. As shown in FIG. 17, the information authentication apparatus based on the virtual reality scenario includes: an acquiring unit 10, a sending unit 20 and a receiving unit 30. The acquiring unit 10 includes an acquiring module 13 and a second decoding module 14, and the sending unit 20 includes a second searching module 23 and a second sending module 24.

It should be noted that, functions of the acquiring unit 10, the sending unit 20, the receiving unit 30, and the acquiring module 13 and the second decoding module 14 included in the acquiring unit 10 in this embodiment are the same as functions of corresponding components of the information authentication apparatus based on the virtual reality scenario in the embodiment shown in FIG. 16, and details are not described herein again.

The second searching module 23 is configured to search for an API interface matching with a type of the to-be-authenticated information by the terminal.

The second searching module 23 searches for the API interface matching with the type of the to-be-authenticated information by the terminal, after the acquiring unit 10 acquires the to-be-authenticated information in the virtual reality scenario. In other words, the second searching module 23 identifies the API interface matching with the type of the to-be-authenticated information from multiple API interfaces by the terminal. The terminal may be a smartphone, a tablet computer or the like. The terminal is installed with an application, and may provide an authentication service.

The second sending module 24 is configured to send the to-be-authenticated information to the authentication device through the API interface if the API interface matching with the type of the to-be-authenticated information is found.

The second searching module 23 sends, if the API interface matching with the type of the to-be-authenticated information is found, the to-be-authenticated information to the authentication device through an API interface. Optionally, the second sending module 24 sends the to-be-authenticated information to the authentication device through the API interface under 3G, 4G, or 5G network, and the authentication device may be an application, such as an instant messaging application.

Optionally, the image in the information authentication apparatus based on the virtual reality scenario includes: an image displaying a two-dimensional code.

In this embodiment, the acquiring unit 10 acquires the to-be-authenticated information in the virtual reality scenario, and the sending unit 20 sends the to-be-authenticated information to the authentication device in the reality scenario. The authentication device is configured to perform authentication on the to-be-authenticated information, and the receiving unit 30 receives the authentication result sent by the authentication device in the virtual reality scenario. The authentication result indicates that the to-be-authenticated information is authenticated successfully or fails to be authenticated. According to the application, a technical problem that an information authentication method in a virtual reality in related technologies is complex is solved, thereby achieving a technical effect of simplifying the information authentication method in the virtual reality.

It should be noted that, the example and the application scenario implemented by the unit and the module are the same as those implemented by the corresponding steps, and the unit and the module are not limited to content disclosed in the foregoing embodiment. It should be noted that, the unit and the module as a part of an apparatus may operate in a hardware environment shown in FIG. 1, may be implemented by software, or may be implemented by hardware. In an example, the hardware environment here may include a network environment.

A technical problem that an information authentication method in a virtual reality in related technologies is complex can be solved by using the unit and the module, thereby achieving a technical effect of simplifying the information authentication method in the virtual reality.

According to an embodiment of this application, a virtual reality device for implementing an information authentication method based on the virtual reality scenario is further provided.

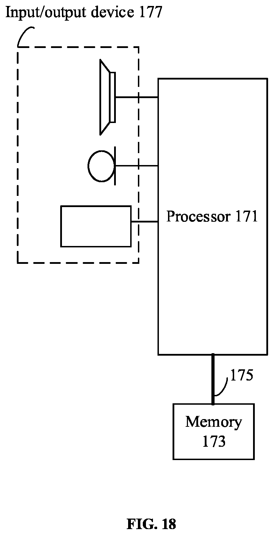

FIG. 18 is a structural block diagram of a virtual reality device according to an embodiment of the present disclosure. As shown in FIG. 18, the virtual reality device may include: one or more (only one shown in the figure) processors 171, a memory 173, and a transmission apparatus 175 (such as the sending apparatus in the foregoing embodiment). As shown in FIG. 18, the virtual reality device may further include an input/output device 177.

The memory 173 may be configured to store a software program and a module such as a program instruction/module corresponding to the information authentication method based on the virtual reality scenario in the embodiment of this application. The processor 171 runs the software program and the module stored in the memory 173, to execute various function applications and data processing, that is, implement the information authentication method based on the virtual reality scenario. The memory 173 may include a high-speed random memory, and may further include a nonvolatile memory such as one or more magnetic storage devices, a flash memory, or another nonvolatile solid-state memory. In some examples, the memory 173 may further include memories remotely arranged relative to the processor 171, and these remote memories may be connected to the virtual reality device over a network. Examples of the network include, but are not limited to, the Internet, an intranet, a local area network, a mobile communications network, and a combination thereof.

The transmission apparatus 175 is configured to receive or send data over a network, or may be further configured to transmit data between a processor and a memory. Specific examples of the foregoing network may include a wired network and a wireless network. In an example, the transmission apparatus 175 includes a network interface controller (NIC) that may be connected to another network device and a router through a network cable, thereby communicating with the Internet or a local area network. In an example, the transmission apparatus 175 is a radio frequency (RF) module that is configured to communicate with the Internet in a wireless manner.

Specifically, the memory 173 is configured to store an application.

The processor 171 may invoke, by using the transmission apparatus 175, the application stored in the memory 173, so as to execute the following steps:
acquiring to-be-authenticated information in a virtual reality scenario;
sending the to-be-authenticated information to an authentication device in a reality scenario, the authentication device being configured to perform authentication on the to-be-authenticated information; and
receiving an authentication result sent by the authentication device in the virtual reality scenario, the authentication result indicating that the to-be-authenticated information is authenticated successfully or fails to be authenticated.

The processor 171 is further configured to execute the following steps: acquiring an image displayed in the virtual reality scenario by scanning in the virtual reality scenario, the image being obtained by encoding the to-be-authenticated information; and decoding the image to obtain the to-be-authenticated information, the encoding corresponding to the decoding.

The processor 171 is further configured to execute the following steps: decoding the image, in the virtual reality scenario; searching for an API interface matching with a type of the to-be-authenticated information in the virtual reality scenario; and sending the to-be-authenticated information to the authentication device through the API interface in the virtual reality scenario if the API interface matching with the type of the to-be-authenticated information is found.

The processor 171 is further configured to execute the following steps: acquiring an image displayed in the virtual reality scenario by a terminal in the reality scenario, the image being obtained by encoding the to-be-authenticated information; decoding the image to obtain the to-be-authenticated information, the encoding corresponding to the decoding; and sending the to-be-authenticated information to the authentication device by the terminal.

The processor 171 is further configured to execute the following steps: searching for the API interface matching with the type of the to-be-authenticated information by the terminal; and sending the to-be-authenticated information to the authentication device through the API interface if the API interface matching with the type of the to-be-authenticated information is found.

According to the embodiment of the application, a solution of an information authentication method based on a virtual reality scenario is provided. To-be-authenticated information in the virtual reality scenario is acquired; the to-be-authenticated information is sent to an authentication device in a reality scenario, the authentication device being configured to perform authentication on the to-be-authenticated information; and an authentication result sent by the authentication device is received in the virtual reality scenario, the authentication result indicating that the to-be-authenticated information is authenticated successfully or fails to be authenticated, so that authentication on the to-be-authenticated information in a virtual scenario is achieved, thereby implementing a technical effect of simplifying an information authentication method in a virtual reality and solving a technical problem that an information authentication method in a virtual reality in related technologies is complex.

Optionally, a specific example in this embodiment may be referred to the examples described in the embodiments above, and details are not described herein again in this embodiment.

Persons of ordinary skill in the art may understand that, the structure shown in FIG. 18 is merely schematic, and the virtual reality device may be a device such as a virtual reality helmet, a pair of virtual reality glasses, or a virtual reality all-in-one machine. FIG. 18 does not limit the structure of the foregoing virtual reality device. For example, the virtual reality device may further include more or less components (such as a network interface and a display apparatus) than those shown in FIG. 18, or has a configuration different from that shown in FIG. 18.

Persons of ordinary skill in the art may understand that all or a part of the steps of the methods in the foregoing embodiments may be implemented by relevant hardware of the virtual reality device instructed by a program. The program may be stored in a computer readable storage medium. The storage medium may include: a flash disk, a read-only memory (ROM), a random access memory (RAM), a magnetic disk or an optical disc.

According to an embodiment of the present disclosure, a virtual reality device is further provided. The virtual reality device includes a memory, a processor and a computer program which is stored on the memory and may be executed in the processor. The processor executes the information authentication method based on the virtual reality scenario according to the embodiment of the present disclosure by executing the computer program.

According to an embodiment of this application, a storage medium is further provided. Optionally, in this embodiment, the foregoing storage medium may be used for executing program codes of the information authentication method based on the virtual reality scenario.

Optionally, in this embodiment, the storage medium may be located on at least one network device of the multiple network devices in the network shown in the foregoing embodiment.

Optionally, in this embodiment, the storage medium is configured to store program codes for executing the following steps:
acquiring to-be-authenticated information in a virtual reality scenario;
sending the to-be-authenticated information to an authentication device in a reality scenario, the authentication device being configured to perform authentication on the to-be-authenticated information; and
receiving an authentication result sent by the authentication device in the virtual reality scenario, the authentication result indicating that the to-be-authenticated information is authenticated successfully or fails to be authenticated.

Optionally, the storage medium is further configured to store program codes for executing the following steps: acquiring an image displayed in the virtual reality scenario by scanning in the virtual reality scenario, the image being obtained by encoding the to-be-authenticated information; and decoding the image to obtain the to-be-authenticated information, the encoding corresponding to the decoding.

Optionally, the storage medium is further configured to store program codes for executing the following steps: decoding the image, in the virtual reality scenario; searching for an API interface matching with a type of the to-be-authenticated information in the virtual reality scenario; and sending the to-be-authenticated information to the authentication device through the API interface in the virtual reality scenario if the API interface matching with the type of the to-be-authenticated information is found.

Optionally, the storage medium is further configured to store program codes for executing the following steps: acquiring an image displayed in the virtual reality scenario by a terminal in the reality scenario, the image being obtained by encoding the to-be-authenticated information; decoding the image to obtain the to-be-authenticated information, the encoding corresponding to the decoding; and sending the to-be-authenticated information to the authentication device.

Optionally, the storage medium is further configured to store program codes for executing the following steps: searching for the API interface matching with the type of the to-be-authenticated information by the terminal; and sending the to-be-authenticated information to the authentication device through the API interface if the API interface matching with the type of the to-be-authenticated information is found.

Optionally, a specific example in this embodiment may be referred to the examples described in the embodiments above, and details are not described herein again in this embodiment.

Optionally, in this embodiment, the storage medium described above may include but is not limited to any medium that can store program codes, such as a USB flash drive, a read-only memory (ROM), a random access memory (RAM), a removable hard disk, a magnetic disk or an optical disc.

The sequence numbers of the preceding embodiments of this application are merely for description but do not indicate the preference of the embodiments.

The integrated unit in the foregoing embodiment may be stored in the foregoing computer readable storage medium when being implemented in a form of a software functional unit and sold or used as an independent product. Based on such understanding, the technical solutions of the embodiments of this application essentially, or the part contributing to the conventional technology, or all or some of the technical solutions may be implemented in a form of a software product. The computer software product is stored in a storage medium and includes several instructions for instructing one or more computer devices (which may be a personal computer, a server, a network device, or the like) to perform all or some of the steps of the methods described in the embodiments of this application.

In the foregoing embodiments of this application, descriptions of the embodiments have different emphases, and as for parts that are not described in detail in one embodiment, reference can be made to the relevant description of the other embodiments.

In the several embodiments provided in this application, it should be understood that the disclosed client may be implemented in other manners. The described apparatus embodiment is merely exemplary. For example, the unit division is merely logical function division and may be performed in other manners in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the units or modules may be implemented in electronic or other forms.

The units described as separate parts may be or may not be physically separate, and parts displayed as units may be or may not be physical units, that is, may be located in one position, or may be distributed on multiple network units. Some or all of the units may be selected according to actual requirements to achieve the objectives of the solutions of the embodiments.

In addition, functional units in the embodiments of this application may be integrated into one processing unit, or the units may exist physically independently, or two or more units are integrated into one unit. The integrated unit may be implemented in a form of hardware, or may be implemented in a form of a software functional unit.

The above descriptions are merely preferred embodiments of this application, and it should be noted that, persons of ordinary skill in the art may make various changes and modifications without departing from the principle of this application. All such changes and modifications should also be intended to be covered by this application.

## Claims

1. An information authentication method based on a virtual reality scenario, comprising:
acquiring (202) to-be-authenticated information in the virtual reality scenario, wherein the to-be-authenticated information exists in the virtual reality scenario;
sending (204) the to-be-authenticated information to an authentication device in a reality scenario, wherein the authentication device is configured to perform authentication on the to-be-authenticated information; and
receiving (206) an authentication result sent by the authentication device, wherein the authentication result is received in the virtual reality scenario, and the authentication result indicates that the to-be-authenticated information is authenticated successfully or fails to be authenticated.

2. The method according to claim 1, wherein the acquiring (202) to-be-authenticated information in the virtual reality scenario comprises:
acquiring (301) an image displayed in the virtual reality scenario by scanning in the virtual reality scenario, wherein the image is obtained by encoding the to-be-authenticated information; and
decoding (302) the image to obtain the to-be-authenticated information, wherein the encoding corresponds to the decoding.

3. The method according to claim 2, wherein
the decoding (302) the image comprises: decoding the image, in the virtual reality scenario; and
the sending (204) the to-be-authenticated information to an authentication device in a reality scenario comprises: searching (401) for an API interface matching with a type of the to-be-authenticated information in the virtual reality scenario; and sending (402) the to-be-authenticated information to the authentication device through the API interface in the virtual reality scenario in a case that the API interface matching with the type is found.

4. The method according to claim 2, wherein
the decoding (302) the image comprises: sending the image to a terminal, wherein the terminal is configured to decode the image to obtain the to-be-authenticated information, and the encoding corresponds to the decoding; and
the sending (204) the to-be-authenticated information to an authentication device in a reality scenario comprises: searching, by the terminal, for an API interface matching with a type of the to-be-authenticated information, and sending the to-be-authenticated information to the authentication device through the API interface in a case that the API interface matching with the type is found.

5. The method according to claim 1, wherein
the acquiring (202) to-be-authenticated information in the virtual reality scenario comprises: acquiring (501) an image displayed in the virtual reality scenario by a terminal in the reality scenario, the image being obtained by encoding the to-be-authenticated information; and decoding (502) the image to obtain the to-be-authenticated information, the encoding corresponding to the decoding; and
the sending (204) the to-be-authenticated information to an authentication device in a reality scenario comprises: sending the to-be-authenticated information to the authentication device by the terminal.

6. The method according to claim 5, wherein the sending the to-be-authenticated information to the authentication device by the terminal comprises:
searching (601) for an API interface matching with a type of the to-be-authenticated information by the terminal; and
sending (602) the to-be-authenticated information to the authentication device through the API interface in a case that the API interface matching with the type is found.

7. The method according to any one of claims 2 to 5, wherein the image comprises an image displaying a two-dimensional code.

8. An information authentication apparatus based on a virtual reality scenario, comprising:
an acquiring unit (10), configured to acquire to-be-authenticated information in the virtual reality scenario, wherein the to-be-authenticated information exists in the virtual reality scenario;
a sending unit (20), configured to send the to-be-authenticated information to an authentication device in a reality scenario, wherein the authentication device is configured to perform authentication on the to-be-authenticated information; and
a receiving unit (30), configured to receive an authentication result sent by the authentication device in the virtual reality scenario, wherein the authentication result is received, and the authentication result indicates that the to-be-authenticated information is authenticated successfully or fails to be authenticated.

9. The apparatus according to claim 8, wherein the acquiring unit (10) comprises:
a scanning module (11), configured to acquire an image displayed in the virtual reality scenario by scanning in the virtual reality scenario, wherein the image is obtained by encoding the to-be-authenticated information; and
a first decoding module (12), configured to decode the image to obtain the to-be-authenticated information, wherein the encoding corresponds to the decoding.

10. The apparatus according to claim 9, wherein
the first decoding module (12) is configured to: decode the image, in the virtual reality scenario; and
the sending unit (20) comprises: a first searching module (21), configured to search for an API interface matching with a type of the to-be-authenticated information in the virtual reality scenario; and a first sending module (22), configured to send the to-be-authenticated information to the authentication device through the API interface in the virtual reality scenario in a case that the API interface matching with the type is found.

11. The apparatus according to claim 9, wherein
the first decoding module (12) is configured to send the image to a terminal, wherein the terminal is configured to decode the image to obtain the to-be-authenticated information, and the encoding corresponds to the decoding; and
the sending unit (20) is configured to search for an API interface matching with a type of the to-be-authenticated information by the terminal, and send the to-be-authenticated information to the authentication device through the API interface in a case that the API interface matching with the type is found.

12. The apparatus according to claim 8, wherein
the acquiring unit (10) comprises: an acquiring module (13), configured to acquire an image displayed in the virtual reality scenario by a terminal in the reality scenario, the image being obtained by encoding the to-be-authenticated information; and a second decoding module (14), configured to decode the image to obtain the to-be-authenticated information, the encoding corresponding to the decoding; and
the sending unit (20) is configured to send the to-be-authenticated information to the authentication device by the terminal.

13. The apparatus according to claim 12, wherein the sending unit (20) comprises:
a second searching module (23), configured to search for an API interface matching with a type of the to-be-authenticated information by the terminal; and
a second sending module (24), configured to send the to-be-authenticated information to the authentication device through the API interface in a case that the API interface matching with the type is found.

14. The apparatus according to any one of claims 9 to 12, wherein the image comprises an image displaying a two-dimensional code.

15. A computer readable storage medium, wherein a program instruction for executing the method according to any one of claims 1 to 7 is stored in the computer readable storage medium.

## Patentansprüche

1. Verfahren zur Authentifizierung von Informationen auf der Grundlage eines Virtual-Reality-Szenarios, umfassend:
Erfassen (202) von zu authentifizierenden Informationen in dem Virtual-Reality-Szenario, wobei die zu authentifizierenden Informationen in dem Virtual-Reality-Szenario existieren;
Senden (204) der zu authentifizierenden Informationen an eine Authentifizierungsvorrichtung in einem Reality-Szenario, wobei die Authentifizierungsvorrichtung konfiguriert ist, um eine Authentifizierung an den zu authentifizierenden Informationen durchzuführen; und
Empfangen (206) eines von der Authentifizierungsvorrichtung gesendeten Authentifizierungsergebnisses, wobei das Authentifizierungsergebnis in dem Virtual-Reality-Szenario empfangen wird und das Authentifizierungsergebnis anzeigt, dass die zu authentifizierenden Informationen erfolgreich authentifiziert wurden oder nicht authentifiziert werden konnten.

2. Verfahren nach Anspruch 1, wobei das Erfassen (202) von zu authentifizierenden Informationen in dem Virtual-Reality-Szenario umfasst:
Erfassen (301) eines in dem Virtual-Reality-Szenario angezeigten Bildes durch Scannen in dem Virtual-Reality-Szenario, wobei das Bild durch Codieren der zu authentifizierenden Informationen erhalten wird; und
Decodieren (302) des Bildes, um die zu authentifizierenden Informationen zu erhalten, wobei das Codieren dem Decodieren entspricht.

3. Verfahren nach Anspruch 2, wobei
das Decodieren (302) des Bildes umfasst: Decodieren des Bildes in dem Virtual-Reality-Szenario; und
das Senden (204) der zu authentifizierenden Informationen an eine Authentifizierungsvorrichtung in einem Reality-Szenario umfasst: Suchen (401) nach einer API-Schnittstelle, die mit einem Typ der zu authentifizierenden Informationen in dem Virtual-Reality-Szenario übereinstimmt; und Senden (402) der zu authentifizierenden Informationen an die Authentifizierungsvorrichtung über die API-Schnittstelle in dem Virtual-Reality-Szenario in einem Fall, dass die API-Schnittstelle, die mit dem Typ übereinstimmt, gefunden wird.

4. Verfahren nach Anspruch 2, wobei
das Decodieren (302) des Bildes umfasst: Senden des Bildes an ein Endgerät, wobei das Endgerät konfiguriert ist, um das Bild zu decodieren, um die zu authentifizierenden Informationen zu erhalten, und das Codieren dem Decodieren entspricht; und
das Senden (204) der zu authentifizierenden Informationen an eine Authentifizierungsvorrichtung in einem Reality-Szenario umfasst: Suchen, durch das Endgerät, nach einer API-Schnittstelle, die mit einem Typ der zu authentifizierenden Informationen übereinstimmt, und Senden der zu authentifizierenden Informationen an die Authentifizierungsvorrichtung über die API-Schnittstelle in einem Fall, dass die API-Schnittstelle, die mit dem Typ übereinstimmt, gefunden wird.

5. Verfahren nach Anspruch 1, wobei
das Erfassen (202) von zu authentifizierenden Informationen in dem Virtual-Reality-Szenario umfasst: Erfassen (501) eines Bildes, das in dem Virtual-Reality-Szenario durch ein Endgerät in dem Reality-Szenario angezeigt wird, wobei das Bild durch Codieren der zu authentifizierenden Informationen erhalten wird; und Decodieren (502) des Bildes, um die zu authentifizierenden Informationen zu erhalten, wobei das Codieren dem Decodieren entspricht; und
das Senden (204) der zu authentifizierenden Informationen an eine Authentifizierungsvorrichtung in einem Reality-Szenario umfasst: Senden der zu authentifizierenden Informationen an die Authentifizierungsvorrichtung durch das Endgerät.

6. Verfahren nach Anspruch 5, wobei das Senden der zu authentifizierenden Informationen an die Authentifizierungsvorrichtung durch das Endgerät umfasst:
Suchen (601) nach einer API-Schnittstelle, die mit einem Typ der zu authentifizierenden Informationen übereinstimmt, durch das Endgerät; und
Senden (602) der zu authentifizierenden Informationen an die Authentifizierungsvorrichtung über die API-Schnittstelle, in einem Fall, dass die API-Schnittstelle, die mit dem Typ übereinstimmt, gefunden wurde.

7. Verfahren nach einem der Ansprüche 2 bis 5, wobei das Bild ein Bild umfasst, das einen zweidimensionalen Code darstellt.

8. Vorrichtung zur Authentifizierung von Informationen auf der Grundlage eines Virtual-Reality-Szenarios, umfassend:
eine Erfassungseinheit (10), die konfiguriert ist, um zu authentifizierende Informationen in dem Virtual-Reality-Szenario zu erfassen, wobei die zu authentifizierenden Informationen in dem Virtual-Reality-Szenario existieren;
eine Sendeeinheit (20), die konfiguriert ist, um die zu authentifizierenden Informationen an eine Authentifizierungsvorrichtung in einem Reality-Szenario zu senden, wobei die Authentifizierungsvorrichtung konfiguriert ist, um eine Authentifizierung an den zu authentifizierenden Informationen durchzuführen; und
eine Empfangseinheit (30), die konfiguriert ist, um ein Authentifizierungsergebnis zu empfangen, das von der Authentifizierungsvorrichtung in dem Virtual-Reality-Szenario gesendet wird, wobei das Authentifizierungsergebnis empfangen wird und das Authentifizierungsergebnis anzeigt, dass die zu authentifizierenden Informationen erfolgreich authentifiziert wurden oder nicht authentifiziert werden konnten.

9. Vorrichtung nach Anspruch 8, wobei die Erfassungseinheit (10) umfasst:
ein Scanmodul (11), das konfiguriert ist, um ein in dem Virtual-Reality-Szenario angezeigtes Bild durch Scannen in dem Virtual-Reality-Szenario zu erfassen, wobei das Bild durch Codieren der zu authentifizierenden Informationen erhalten wird; und
ein erstes Decodiermodul (12), das konfiguriert ist, um das Bild zu decodieren, um die zu authentifizierenden Informationen zu erhalten, wobei das Codieren dem Decodieren entspricht.

10. Vorrichtung nach Anspruch 9, wobei
das erste Decodiermodul (12) konfiguriert ist, um: das Bild in dem Virtual-Reality-Szenario zu decodieren; und
die Sendeeinheit (20) umfasst: ein erstes Suchmodul (21), das konfiguriert ist, um nach einer API-Schnittstelle zu suchen, die mit einem Typ der zu authentifizierenden Informationen in dem Virtual-Reality-Szenario übereinstimmt; und ein erstes Sendemodul (22), das konfiguriert ist, um die zu authentifizierenden Informationen über die API-Schnittstelle in dem Virtual-Reality-Szenario an die Authentifizierungsvorrichtung zu senden, in einem Fall, dass die API-Schnittstelle, die mit dem Typ übereinstimmt, gefunden wird.

11. Vorrichtung nach Anspruch 9, wobei
das erste Decodiermodul (12) konfiguriert ist, um das Bild an ein Endgerät zu senden, wobei das Endgerät konfiguriert ist, um das Bild zu decodieren, um die zu authentifizierende Information zu erhalten, und das Codieren dem Decodieren entspricht; und
die Sendeeinheit (20) konfiguriert ist, um nach einer API-Schnittstelle, die mit einem Typ der zu authentifizierenden Informationen übereinstimmt, durch das Endgerät zu suchen, und die zu authentifizierenden Informationen über die API-Schnittstelle an die Authentifizierungsvorrichtung zu senden, in einem Fall, dass die API-Schnittstelle, die mit dem Typ übereinstimmt, gefunden wird.

12. Vorrichtung nach Anspruch 8, wobei
die Erfassungseinheit (10) umfasst: ein Erfassungsmodul (13), das konfiguriert ist, um ein Bild zu erfassen, das in dem Virtual-Reality-Szenario durch ein Endgerät in dem Reality-Szenario angezeigt wird, wobei das Bild durch Codieren der zu authentifizierenden Informationen erhalten wird; und ein zweites Decodiermodul (14), das konfiguriert ist, um das Bild zu decodieren, um die zu authentifizierenden Informationen zu erhalten, wobei das Codieren dem Decodieren entspricht; und
die Sendeeinheit (20) konfiguriert ist, um die zu authentifizierenden Informationen über das Endgerät an die Authentifizierungsvorrichtung zu senden.

13. Vorrichtung nach Anspruch 12, wobei die Sendeeinheit (20) umfasst:
ein zweites Suchmodul (23), das konfiguriert ist, um nach einer API-Schnittstelle zu suchen, die mit einem Typ der zu authentifizierenden Informationen übereinstimmt, durch das Endgerät; und
ein zweites Sendemodul (24), das konfiguriert ist, um die zu authentifizierenden Informationen über die API-Schnittstelle an die Authentifizierungsvorrichtung zu senden, in einem Fall, dass die API-Schnittstelle, die mit dem Typ übereinstimmt, gefunden wird.

14. Vorrichtung nach einem der Ansprüche 9 bis 12, wobei das Bild ein Bild umfasst, das einen zweidimensionalen Code darstellt.

15. Computerlesbares Speichermedium, wobei in dem computerlesbaren Speichermedium ein Programmbefehl zum Ausführen des Verfahrens nach einem der Ansprüche 1 bis 7 gespeichert ist.

## Revendications

1. Procédé d'authentification d'informations basé sur un scénario de réalité virtuelle, comprenant:
acquérir (202) des informations à authentifier dans le scénario de réalité virtuelle, dans lequel les informations à authentifier existent dans le scénario de réalité virtuelle;
envoyer (204) les informations à authentifier à un dispositif d'authentification dans un scénario de réalité, dans lequel le dispositif d'authentification est configuré pour effectuer une authentification sur les informations à authentifier; et
recevoir (206) un résultat d'authentification envoyé par le dispositif d'authentification, dans lequel le résultat d'authentification est reçu dans le scénario de réalité virtuelle, et le résultat d'authentification indique que les informations à authentifier sont authentifiées avec succès ou échouent à être authentifiées.

2. Procédé selon la revendication 1, dans lequel l'acquisition (202) d'informations à authentifier dans le scénario de réalité virtuelle comprend:
acquérir (301) une image affichée dans le scénario de réalité virtuelle par balayage dans le scénario de réalité virtuelle, dans lequel l'image est obtenue en codant les informations à authentifier; et
décoder (302) l'image pour obtenir les informations à authentifier, dans lequel le codage correspond au décodage.

3. Procédé selon la revendication 2, dans lequel
le décodage (302) de l'image comprend: décoder l'image dans le scénario de réalité virtuelle; et
l'envoi (204) des informations à authentifier à un dispositif d'authentification dans un scénario de réalité comprend: rechercher (401) une interface API correspondant à un type des informations à authentifier dans le scénario de réalité virtuelle; et envoyer (402) les informations à authentifier au dispositif d'authentification par l'intermédiaire de l'interface API dans le scénario de réalité virtuelle dans un cas où l'interface API correspondant au type est trouvée.

4. Procédé selon la revendication 2, dans lequel
le décodage (302) de l'image comprend: envoyer l'image à un terminal, dans lequel le terminal est configuré pour décoder l'image afin d'obtenir les informations à authentifier, et le codage correspond au décodage; et
l'envoi (204) des informations à authentifier à un dispositif d'authentification dans un scénario de réalité comprend: rechercher, par le terminal, une interface API correspondant à un type des informations à authentifier, et envoyer les informations à authentifier au dispositif d'authentification par l'intermédiaire de l'interface API dans un cas où l'interface API correspondant au type est trouvée.

5. Procédé selon la revendication 1, dans lequel
l'acquisition (202) d'informations à authentifier dans le scénario de réalité virtuelle comprend: acquérir (501) une image affichée dans le scénario de réalité virtuelle par un terminal dans le scénario de réalité, dans lequel l'image est obtenue en codant les informations à authentifier; et décoder (502) l'image pour obtenir les informations à authentifier, le codage correspondant au décodage; et
l'envoi (204) des informations à authentifier à un dispositif d'authentification dans un scénario de réalité comprend: envoyer les informations à authentifier au dispositif d'authentification par le terminal.

6. Procédé selon la revendication 5, dans lequel l'envoi des informations à authentifier au dispositif d'authentification par le terminal comprend:
rechercher (601) une interface API correspondant à un type des informations à authentifier, par le terminal; et
envoyer (602) les informations à authentifier au dispositif d'authentification par l'intermédiaire de l'interface API dans un cas où l'interface API correspondant au type est trouvée.

7. Procédé selon l'une quelconque des revendications 2 à 5, dans lequel l'image comprend une image affichant un code bidimensionnel.

8. Dispositif d'authentification d'informations basé sur un scénario de réalité virtuelle, comprenant:
une unité d'acquisition (10) configurée pour acquérir des informations à authentifier dans le scénario de réalité virtuelle, dans lequel les informations à authentifier existent dans le scénario de réalité virtuelle;
une unité d'envoi (20) configurée pour envoyer les informations à authentifier à un dispositif d'authentification dans un scénario de réalité, dans lequel le dispositif d'authentification est configuré pour effectuer une authentification sur les informations à authentifier; et
une unité de réception (30) configurée pour recevoir un résultat d'authentification envoyé par le dispositif d'authentification dans le scénario de réalité virtuelle, dans lequel le résultat d'authentification est reçu, et le résultat d'authentification indique que les informations à authentifier sont authentifiées avec succès ou échouent à être authentifiées.

9. Dispositif selon la revendication 8, dans lequel l'unité d'acquisition (10) comprend:
un module de balayage (11) configuré pour acquérir une image affichée dans le scénario de réalité virtuelle par balayage dans le scénario de réalité virtuelle, dans lequel l'image est obtenue en codant les informations à authentifier; et
un premier module de décodage (12) configuré pour décoder l'image afin d'obtenir les informations à authentifier, dans lequel le codage correspond au décodage.

10. Dispositif selon la revendication 9, dans lequel
le premier module de décodage (12) est configuré pour: décoder l'image dans le scénario de réalité virtuelle; et
l'unité d'envoi (20) comprend: un premier module de recherche (21) configuré pour rechercher une interface API correspondant à un type des informations à authentifier dans le scénario de réalité virtuelle; et un premier module d'envoi (22) configuré pour envoyer les informations à authentifier au dispositif d'authentification par l'intermédiaire de l'interface API dans le scénario de réalité virtuelle dans un cas où l'interface API correspondant au type est trouvée.

11. Dispositif selon la revendication 9, dans lequel
le premier module de décodage (12) est configuré pour envoyer l'image à un terminal, dans lequel le terminal est configuré pour décoder l'image afin d'obtenir les informations à authentifier, et le codage correspond au décodage; et
l'unité d'envoi (20) est configurée pour rechercher, par le terminal, une interface API correspondant à un type des informations à authentifier, et pour envoyer les informations à authentifier au dispositif d'authentification par l'intermédiaire de l'interface API dans un cas où l'interface API correspondant au type est trouvée.

12. Dispositif selon la revendication 8, dans lequel
l'unité d'acquisition (10) comprend: un module d'acquisition (13) configuré pour acquérir une image affichée dans le scénario de réalité virtuelle par un terminal dans le scénario de réalité, dans lequel l'image est obtenue en codant les informations à authentifier; et un deuxième module de décodage (14) configuré pour décoder l'image afin d'obtenir les informations à authentifier, le codage correspondant au décodage; et
l'unité d'envoi (20) est configurée pour envoyer les informations à authentifier au dispositif d'authentification par le terminal.

13. Dispositif selon la revendication 12, dans lequel l'unité d'envoi (20) comprend:
un deuxième module de recherche (23) configuré pour rechercher, par le terminal, une interface API correspondant à un type des informations à authentifier; et
un deuxième module d'envoi (24) configuré pour envoyer les informations à authentifier au dispositif d'authentification par l'intermédiaire de l'interface API dans un cas où l'interface API correspondant au type est trouvée.

14. Dispositif selon l'une quelconque des revendications 9 à 12, dans lequel l'image comprend une image affichant un code bidimensionnel.

15. Support de stockage lisible par ordinateur, dans lequel une instruction de programme pour exécuter le procédé selon l'une quelconque des revendications 1 à 7 est stockée dans le support de stockage lisible par ordinateur.
